# FASCICULE DE BREVET EUROPEEN

(11) **EP 2 789 075 B1**
(45) Date de publication et mention de la délivrance du brevet: **15.11.2017**
(21) Numéro de dépôt: 12812394.0
(22) Date de dépôt: 04.12.2012
(51) Int. Cl.: H02K 1/14, H02K 15/02

(54) **CIRCUIT MAGNETIQUE EN SECTEURS**
MAGNETSCHALTUNG MIT SEKTOREN
MAGNETIC CIRCUIT COMPRISING SECTORS

(30) Priorité: 05.12.2011 FR 1161148
(43) Date de publication de la demande: 15.10.2014
(73) Titulaire: Moteurs Leroy-Somer, 16000 Angouleme (FR)
(72) Inventeur: VOHLGEMUTH, Patrick, F-16110 La Rochefoucauld (FR)
(74) Mandataire: Nony
(86) Numéro de dépôt international: PCT/IB2012/056941
(87) Numéro de publication internationale: WO 2013/104959

(56) Documents cités:
- WO-A1-2011/125199
- JP-A- 2011 114 989
- US-A1- 2011 204 743

## Description

La présente invention concerne les machines électriques tournantes et plus particulièrement les circuits magnétiques de telles machines.

Les circuits magnétiques d'inducteur d'excitatrice sont classiquement constitués d'un empilage de tôles. Celles-ci sont très souvent découpées d'un seul tenant dans une bande dont la largeur est sensiblement égale au diamètre extérieur de l'inducteur. Les circuits magnétiques peuvent aussi être découpés en secteurs. Chaque secteur constitue alors une fraction d'angle d'une révolution complète. Les secteurs sont ensuite réassemblés et empilés pour reconstituer un circuit magnétique complet.

Dans le premier cas, l'écart entre la tôle magnétique consommée et la matière réellement nécessaire à la conduction du flux magnétique est très important. Il n'est pas rare que la matière première utilisée représente le double de la matière utile au passage du flux.

Dans le deuxième cas, la réalisation en secteurs permet de minimiser la matière consommée car plus la portion d'angle du secteur est faible, plus les chutes de découpage sont faibles. Toutefois, l'assemblage, la reconstitution d'une géométrie correcte et son maintien durant les opérations de bobinage sont difficiles. Généralement, plus la portion d'angle couverte par un secteur est faible, et plus la réalisation du paquet de tôles est complexe.

Les demandes JP 2011 114989 et WO 2011/125199 divulguent des machines électriques dont les circuits magnétiques sont découpés en secteurs.

Il est connu de la demande US 2011/0204743 de former un rotor ou un stator en assemblant par des rivets deux parties coopérantes imbriquées de secteurs adjacents.

L'invention vise à perfectionner encore les circuits magnétiques des machines tournantes électriques et elle y parvient grâce à un circuit magnétique pour machine électrique tournante selon la revendication 1.

L'invention permet de profiter pleinement de la réduction de matière liée au découpage en secteurs des tôles tout en ayant un assemblage des secteurs simple, solide et de bonne qualité.

L'invention permet notamment de concilier un pas angulaire de secteur minimal avec simplicité de fabrication, rigidité du circuit magnétique et qualité d'assemblage.

La forme des reliefs est avantageusement choisie de telle sorte qu'elle conduit à un rapprochement des secteurs lors de la pose des inserts.

Un renflement peut être prévu sur chaque secteur sur sa périphérie extérieure, au niveau des reliefs, c'est-à-dire occupant sensiblement la même position angulaire que les reliefs, autour de l'axe de rotation de la machine.

Le circuit comporte de préférence des trous de fixation du circuit magnétique sur la machine, débouchant sur la périphérie extérieure des secteurs, ayant de préférence une forme en trou de serrure.

Le circuit magnétique est de préférence celui d'un stator, mais peut être aussi celui d'un rotor.

Chaque paquet comporte de préférence une dent du circuit magnétique seulement.

Les flancs des paquets peuvent être disposés sensiblement à mi-distance des dents, au sein du circuit magnétique.

Les logements peuvent présenter chacun une forme sensiblement ronde.

Les inserts sont de préférence constitués par des rivets. Ces derniers ont avantageusement au moins une extrémité bouterollée contre au moins un paquet de tôles.

L'invention a encore pour objet un procédé de découpage de secteurs de tôles pour réaliser un circuit magnétique tel que défini ci-dessus, dans lequel on découpe les secteurs dans une bande de tôle en imbriquant deux séries de secteurs, avec les dents d'une série de secteurs disposées entre les dents de l'autre série, les reliefs à imbriquer d'une série étant découpés sensiblement à mi-distance des reliefs à imbriquer de l'autre série.

L'invention a encore pour objet un procédé de fabrication d'un circuit magnétique, dans lequel on assemble des secteurs en imbriquant des reliefs et l'on introduit dans les logements ainsi créés des inserts pour maintenir les secteurs dans l'état assemblé. De préférence, les inserts sont constitués par des rivets dont on provoque l'expansion radiale dans les logements. De préférence également, les rivets sont bouterollés.

L'invention pourra être mieux comprise à la lecture de la description détaillée qui va suivre, d'un exemple de mise en oeuvre non limitatif de celle-ci, et à l'examen du dessin annexé, sur lequel :
- la figure 1 représente, de façon partielle et schématique, un exemple de circuit magnétique selon l'invention,
- la figure 2 représente isolément un paquet du circuit magnétique de la figure 1,
- la figure 3 représente isolément une tôle du paquet de la figure 2,
- la figure 4 illustre le découpage des secteurs dans une bande de tôle,
- les figures 5 et 6 illustrent l'imbrication des reliefs des secteurs,
- la figure 7 illustre l'insertion des rivets,
- la figure 8 illustre l'introduction des goupilles dans les rivets, et
- la figure 9 illustre le rapprochement des secteurs lié à l'introduction des goupilles.

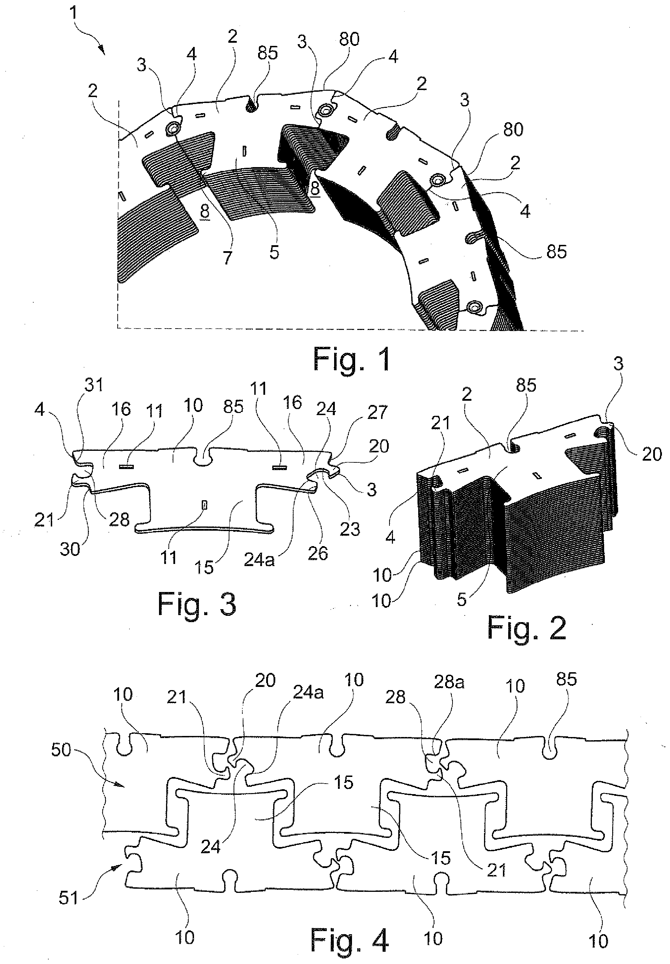

Le circuit magnétique 1 de stator représenté à la figure 1 comporte des paquets 2 assemblés entre eux au niveau de leurs flancs. Chaque paquet 2 comporte une dent 5 du circuit magnétique, pourvue dans l'exemple illustré d'un épanouissement polaire 7. En variante, les dents 5 sont dépourvues d'épanouissements polaires. Le circuit magnétique 1 définit, entre les dents 5, des encoches 8 pour recevoir des conducteurs électriques, non représentés. Le stator peut être à bobinage concentré ou à bobinage distribué. Chaque paquet 2 est formé, comme on le voit sur la figure 2, par l'empilage de tôles magnétiques 10 identiques, en secteurs, dont l'une est représentée à la figure 3. Ces tôles 10 sont assemblées par clipsage en des zones 11, de façon conventionnelle. Les zones de clipsage 11 sont par exemple situées sur la dent 15 de chaque secteur et sur les parties 16 de culasse annulaire, destinées à former le circuit magnétique en arrière des encoches 8.

Des reliefs 20 et 21 sont réalisés aux extrémités de ces parties 16, respectivement sur les flancs 3 et 4, étant destinés chacun à s'imbriquer avec un relief complémentaire d'un secteur adjacent.

Le relief 20 qui fait saillie sur le flanc 3 présente une forme de crochet de concavité 23 dirigée vers une encoche latérale 24, dont le contour reproduit partiellement celui du relief 21. Des bords 26 et 27 sensiblement alignés l'un avec l'autre s'étendent respectivement vers le fond d'encoche du circuit magnétique à partir de l'encoche latérale 24 et radialement vers l'extérieur à partir de la base du crochet 20.

Le flanc 4 comporte une encoche latérale 28 dans laquelle le crochet 20 d'une tôle adjacente peut s'engager, et le relief 21 présente une forme de crochet dont la concavité est dirigée vers l'encoche latérale 28. Ce crochet 21 est positionné sur le flanc 4 de façon à s'engager dans l'encoche latérale 24 de la tôle adjacente, après assemblage des secteurs.

L'encoche latérale 24 présente, du côté opposé au crochet 20, un bord 24a qui est rentrant. Il en est de même de l'encoche latérale 28, qui présente un bord rentrant 28a du côté opposé au crochet 21. Chaque crochet 20 ou 21 présente un corps plus étroit que sa tête.

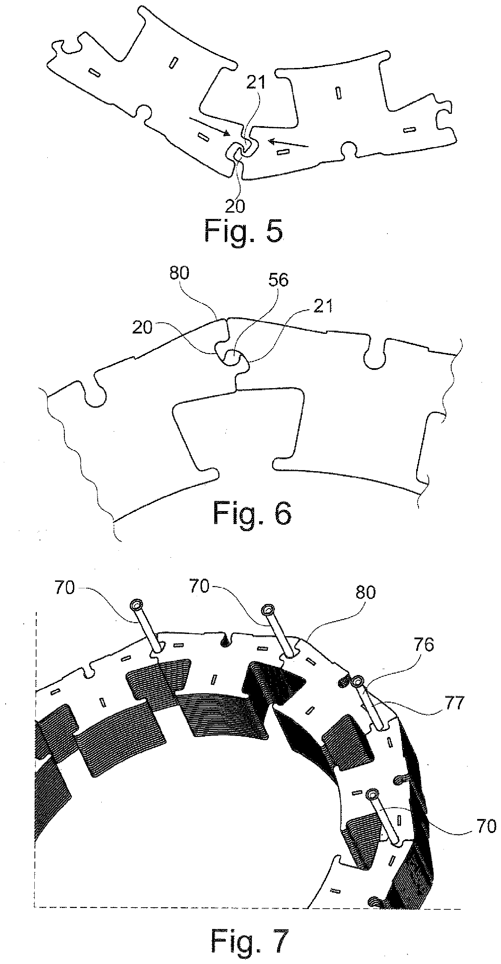

Le profil extérieur du crochet 20 ou 21 et celui de l'encoche latérale 24 ou 28 destinée à le recevoir sont de préférence dimensionnés de telle sorte qu'il subsiste un très léger jeu dans cette zone, notamment entre le sommet du crochet et le bord de l'encoche latérale. Ce jeu est aménagé pour privilégier un contact franc entre les bords 30 et 31 et les bords 26 et 27 des secteurs lors de l'expansion des inserts. Sans ce jeu, l'assemblage risquerait d'être hyperstatique et il serait difficile de maitriser les zones réellement en contact et les zones avec jeu. Sous l'effort d'expansion, lorsque les bords 30 et 31 sont en butée avec les bords 26 et 27 des secteurs adjacents, les crochets 20 et 21 se déforment légèrement, ce qui conduit à minimiser le jeu aménagé initialement entre les crochets et les encoches latérales. De cette manière, l'entrefer sur les surfaces radiales en contact, à savoir celles des bords 26, 27, 30 et 31, est annulé. Il faut noter d'ailleurs que sachant qu'il peut subsister un léger jeu autour du crochet, il est avantageux de réaliser un renflement 80 sur l'extérieur de la tôle au niveau de chaque crochet, comme illustré à la figure 6. De cette façon, on augmente la section de passage du flux dans la zone sans entrefer pour compenser la zone perturbée par la présence des crochets et du jeu éventuel associé. Il est à noter que ce renflement ne consomme pas de matière utile puisqu'il loge dans la largeur de bande servant à réaliser les secteurs.

Des bords 30 et 31 prolongent respectivement le crochet 21 du côté du fond d'encoche 8 du circuit magnétique et l'encoche latérale 28 vers l'extérieur.

Les tôles 10 sont avantageusement découpées, comme illustré sur la figure 4, en deux séries 50 et 51 de secteurs, ces derniers étant disposés au sein de chaque série à intervalles réguliers avec la même orientation. Les séries de secteurs 50 et 51 sont découpées dans une bande de tôle dont la largeur est inférieure au double de la dimension radiale maximale d'un secteur. Les dents 15 des deux séries de secteurs sont imbriquées entre elles.

Les reliefs 20 et 21 des secteurs d'une série se positionnent, dans la direction longitudinale de la bande, sensiblement à mi-distance des reliefs 20 et 21 des secteurs de l'autre série.

La géométrie des crochets 20, 21 est telle que les paquets 2 définissent entre eux, lorsque les crochets sont imbriqués, des logements 56, comme illustré aux figures 5 et 6. En particulier, la concavité de chaque crochet est sensiblement demi-circulaire. Chaque encoche latérale 24 ou 28 présente une ouverture suffisamment large pour permettre le passage de la tête du crochet.

Des rivets tubulaires 70 sont introduits dans les logements 56, comme illustré à la figure 7.

De préférence, le profil des tôles est fait de telle sorte que le diamètre des logements 56 reconstitué entre les crochets 20 et 21permette une insertion libre avec jeu des rivets 70.

Les rivets utilisés sont par exemple de type « tubulaire roulé » avec une fente longitudinale 77 offrant une très grande facilité d'expansion.

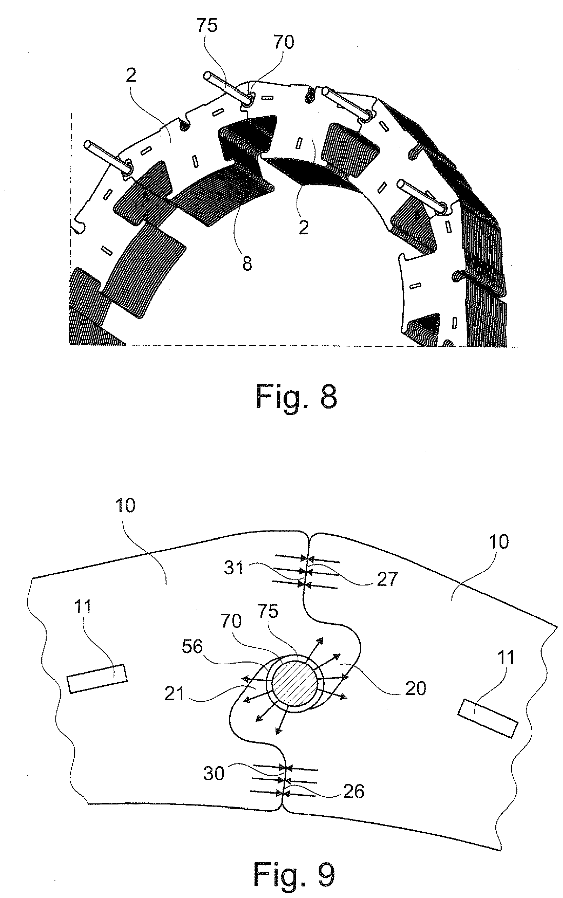

L'emmanchement à force de goupilles 75 au centre des rivets 70 assure l'expansion de ces derniers, comme illustré aux figures 8 et 9, ce qui provoque un rattrapage des jeux dans l'assemblage des paquets. Les secteurs se rapprochent les uns des autres lors de l'expansion de ces rivets 70. De cette façon, les faces latérales d'un paquet viennent se plaquer fortement sur les faces latérales des paquets adjacents, réduisant les entrefers indésirables dans le circuit magnétique et assurant une cohésion mécanique bien supérieure à celle obtenue par un rivetage classique. En fin d'emmanchement des goupilles, la deuxième extrémité des rivets est avantageusement bouterollée sur les paquets.

On combine alors deux effets de maintien, le premier étant radial au coeur des rivets qui sont expansés et l'autre longitudinal par écrasement des têtes de rivets.

L'effet de maintien radial assure que chaque crochet 20 ou 21 est bien appliqué contre le bord de l'encoche latérale qui le reçoit. Les bords 26 et 27 viennent en appui contre les bords 30, 31 et sont orientés radialement.

Les goupilles sont par exemple de type « goupille cannelée », mais d'autres types de goupilles peuvent faire l'affaire.

Des rivets tubulaires réalisés dans un matériau à relativement basse limite élastique peuvent être utilisés en variante.
Les secteurs peuvent comporter, comme illustré, des trous 85 en forme de trou de serrure, destinés au passage de vis, qui serviront à fixer l'inducteur dans la machine, sur un flasque arrière en général. Il est possible d'avoir de simples trous, non débouchant sur la périphérie extérieure.

L'invention n'est pas limitée à l'exemple illustré.

Le choix de l'angle couvert par un secteur peut être différent, ainsi que le choix du lieu de coupure des secteurs, par exemple à mi-largeur des dents.

Les tôles d'un paquet peuvent ne pas être clipsées entre elles.

L'expression « comportant un » doit se comprendre comme étant synonyme de « comportant au moins un ».

## Revendications

1. Circuit magnétique (1) pour machine électrique tournante, comportant une pluralité de paquets (2) de tôles (10) superposées en secteurs, présentant sur leurs flancs (3, 4) en regard des reliefs imbriqués (20, 21), et des inserts (70) introduits dans des logements (56) définis au moins partiellement par l'imbrication des reliefs, ces inserts assurant l'assemblage des secteurs entre eux,
les reliefs (20, 21) ayant chacun une forme de crochet, les concavités de deux crochets imbriqués étant orientées l'une vers l'autre,
et chaque concavité est dirigée vers une encoche latérale (24,28) dont le contour reproduit partiellement celui d'un profil imbriqué, circuit magnétique **caractérisé en ce que** le profil extérieur des reliefs (20, 21) et celui des encoches latérales (24, 28) dans lesquelles ils sont reçus sont choisis de telle sorte qu'il subsiste un jeu entre les reliefs et les encoches après l'imbrication des reliefs et avant la pose des inserts, celle-ci provoquant la déformation des reliefs et amenant des bords (26, 27, 30, 31) des secteurs à venir en butée.

2. Circuit selon l'une quelconque des revendications précédentes, constituant le circuit magnétique d'un stator.

3. Circuit selon la revendication 1 ou 2, chaque paquet (2) comportant une dent (5) du circuit magnétique seulement.

4. Circuit selon la revendication précédente, les flancs des secteurs étant disposés sensiblement à mi-distance des dents (15) des secteurs.

5. Circuit selon l'une quelconque des revendications précédentes, les logements (56) présentant chacun une forme sensiblement ronde.

6. Circuit selon l'une quelconque des revendications précédentes, les inserts étant constitués par des rivets (70), notamment ayant subi une expansion radiale.

7. Circuit selon la revendication précédente, les rivets (70) ayant au moins une extrémité bouterollée contre au moins un paquet.

8. Circuit selon l'une quelconque des revendications précédentes, comportant des trous (85) de fixation du circuit magnétique sur la machine, débouchant sur la périphérie extérieure des secteurs, ayant de préférence une forme en trou de serrure.

9. Circuit selon l'une quelconque des revendications précédentes, comportant un renflement (80) sur chaque secteur, sur sa périphérie extérieure, au niveau des reliefs.

10. Procédé de découpage de secteurs (10) de tôles pour réaliser un circuit magnétique tel que défini dans l'une quelconque des revendications précédentes, dans lequel on découpe les secteurs dans une bande de tôle en imbriquant deux séries (50, 51) de secteurs, avec les dents (15) d'une série de secteurs disposées entre les dents de l'autre série, les reliefs (20, 21) à imbriquer d'une série (50) étant découpés sensiblement à mi-distance des reliefs à imbriquer (20, 21) de l'autre série (51).

11. Procédé de fabrication d'un circuit magnétique selon l'une quelconque des revendications 1 à 9, dans lequel on assemble des secteurs en imbriquant des reliefs et l'on introduit dans les logements ainsi créés des inserts pour maintenir les secteurs dans l'état assemblé.

12. Procédé selon la revendication 11, les inserts étant constitués par des rivets dont on provoque l'expansion radiale dans les logements, notamment en y insérant des goupilles (70).

13. Procédé selon la revendication 12, les rivets étant également bouterollés.

## Patentansprüche

1. Magnetischer Kreis (1) für eine elektrische Rotationsmaschine, mit mehreren Paketen (2) von sektorweise übereinander liegenden Blechen (10), die auf ihren einander gegenüberliegenden Flanken (3, 4) Eingriffsreliefs (20, 21) bilden, und mit Einsätzen (70), die in Aufnahmen (56) eingesetzt sind, die zumindest zum Teil durch die Eingriffsreliefs definiert werden, wobei diese Einsätze das Zusammenfügen der Sektoren miteinander bewirken, wobei die Reliefs (20, 21) jeweils die Form eines Hakens haben und die Höhlungen von zwei ineinandergreifenden Haken aufeinander zu gerichtet sind und wobei jede Höhlung auf eine seitliche Auskerbung (24, 28) gerichtet ist, deren Kontur zum Teil diejenige eines Eingriffsprofils reproduziert,
**dadurch gekennzeichnet, dass** das äußere Profil der Reliefs (20, 21) und dasjenige der seitlichen Auskerbungen (24, 28), in denen sie aufgenommen sind, so gewählt sind, dass zwischen den Reliefs und den Auskerbungen ein Spiel besteht, nachdem die Reliefs miteinander in Eingriff gebracht wurden und bevor die Einsätze eingesetzt werden, wobei letzteres die Verformung der Reliefs hervorruft und bewirkt, dass die Ränder (26, 27, 30, 31) der Sektoren miteinander in Anlage gebracht werden.

2. Magnetischer Kreis nach einem der vorstehenden Ansprüche, der den magnetischen Kreis eines Stators bildet.

3. Magnetischer Kreis nach Anspruch 1 oder 2, bei der jedes Paket (2) nur einen Zahn (5) des magnetischen Kreises bildet.

4. Magnetischer Kreis nach dem vorstehenden Anspruch, bei dem die Flanken der Sektoren im wesentlichen auf halbem Wege zwischen den Zähnen (15) der Sektoren angeordnet sind.

5. Magnetischer Kreis nach einem der vorstehenden Ansprüche, bei dem die Aufnahmen (56) jeweils eine im wesentlichen runde Form haben.

6. Magnetischer Kreis nach einem der vorstehenden Ansprüche, bei dem die Einsätze durch Nieten (70) gebildet sind, insbesondere solche, die radial aufgeweitet wurden.

7. Magnetischer Kreis nach dem vorstehenden Anspruch, bei dem die Nieten (70) wenigstens ein Ende haben, das gegen wenigstens ein Paket gedöppt ist.

8. Magnetischer Kreis nach einem der vorstehenden Ansprüche, mit Löchern (85) zur Befestigung des magnetischen Kreises an der Maschine, welche Löcher im äußeren Umfang der Sektoren münden und vorzugsweise die Form eines Schlüsselloches haben.

9. Magnetischer Kreis nach einem der vorstehenden Ansprüche, mit einer Verdickung (80) auf jedem Sektor, am äußeren Umfang des Sektors, in Höhe der Reliefs.

10. Verfahren zum Ausschneiden von Sektoren von Blechen (10) zur Bildung eines magnetischen Kreises nach einem der vorstehenden Ansprüche, bei welchem Verfahren man die Sektoren aus einem Blechband ausschneidet, indem man zwei Serien (50, 51) der Sektoren so miteinander verzahnt, dass die Zähne (15) einer Serie von Sektoren zwischen den Zähnen der anderen Serie liegen, wobei die Eingriffsreliefs (20, 21) der einen Serie (50) im wesentlichen mittig zwischen den Eingriffsreliefs (20, 21) der anderen Serie (51) ausgeschnitten werden.

11. Verfahren zur Herstellung eines magnetischen Kreises nach einem der Ansprüche 1 bis 9, bei dem die Sektoren zusammengefügt werden, indem man die Reliefs miteinander in Eingriff bringt und in die so gebildeten Aufnahmen die Einsätze einsetzt, um die Sektoren im zusammengefügtem Zustand zu halten.

12. Verfahren nach Anspruch 11, bei dem die Einsätze durch Nieten gebildet werden, die in den Aufnahmen radial aufgeweitet werden, insbesondere durch Einstecken von Stiften (70) in diese Nieten.

13. Verfahren nach Anspruch 12, bei dem die Niete auch gedöppt sind.

## Claims

1. Magnetic circuit (1) for a rotating electric machine, comprising a plurality of bundles (2) of plates (10) stacked in segments, having on their facing flanks (3, 4) nested reliefs (20, 21), and inserts (70) introduced into openings (56) defined at least partially by the nesting of the reliefs, these inserts ensuring that the segments are joined together,
the reliefs (20, 21) each having a hook shape, the concavities of two nested hooks being oriented one towards the other,
and each concavity is directed towards a lateral notch (24, 28), the contour of which partially reproduces that of a nested relief,
magnetic circuit being **characterized in that** the outer profile of the reliefs (20, 21) and that of the lateral notches (24, 28) in which they are received are chosen such that there remains play between the reliefs and the notches after the nesting of the reliefs and before the fitting of the inserts, the latter resulting in the deformation of the reliefs and bringing the edges (26, 27, 30, 31) of the segments into abutment.

2. Circuit according to any one of the preceding claims, constituting the magnetic circuit of a stator.

3. Circuit according to Claim 1 or 2, each bundle (2) comprising just one tooth (5) of the magnetic circuit

4. Circuit according to the preceding claim, the flanks of the segments being arranged substantially midway between the teeth (15) of the segments.

5. Circuit according to any one of the preceding claims, the openings (56) each having a substantially round shape.

6. Circuit according to any one of the preceding claims, the inserts consisting of rivets (70), notably having undergone a radial expansion.

7. Circuit according to the preceding claim, the rivets (70) having at least one end headed against at least one bundle.

8. Circuit according to any one of the preceding claims, comprising holes (85) for fastening the magnetic circuit to the machine, opening on the outer periphery of the segments, preferably in the form of a keyhole.

9. Circuit according to any one of the preceding claims, comprising a bulge (80) on each segment, on its outer periphery, at the level of the reliefs.

10. Method for cutting segments (10) of plates to produce a magnetic circuit as defined in any one of the preceding claims, in which the segments are cut from a strip of plate by nesting two series (50, 51) of segments, with the teeth (15) of one series of segments arranged between the teeth of the other series, the reliefs (20, 21) to be nested of one series (50) being cut substantially midway between the reliefs to be nested (20, 21) of the other series (51).

11. Method for manufacturing a magnetic circuit according to any one of Claims 1 to 9, in which segments are joined by nesting reliefs and inserts are introduced into the duly created openings to keep the segments in the joined state.

12. Method according to Claim 11, the inserts consisting of rivets which are radially expanded in the openings, notably by inserting pins (70) therein.

13. Method according to Claim 12, the rivets also being headed.
